# EUROPÄISCHE PATENTANMELDUNG

(11) **EP 4 455 811 A1**
(43) Veröffentlichungstag der Anmeldung: **30.10.2024**
(21) Anmeldenummer: 24166875.5
(22) Anmeldetag: 27.03.2024
(51) Int. Cl.: G05B 19/406, H04L 67/30

(54) **VERFAHREN ZUR KONFIGURATION VON GERÄTEN ZUR GEBÄUDEAUTOMATION, KONFIGURATIONSGERÄT, GEBÄUDEAUTOMATIONS-NETZWERK UND COMPUTERPROGRAMMPRODUKT**

(30) Priorität: 26.04.2023 DE 102023110801
(71) Anmelder: ABB Schweiz AG, 5400 Baden (CH)
(72) Erfinder: PLATTE, Joerg, 58099 Hagen (DE); NITSCHKE, Thomas, 44225 Dortmund (DE)
(74) Vertreter: Zimmermann & Partner Patentanwälte mbB

(57) **Zusammenfassung**

Verfahren zur Konfigurierung von Geräten zur Gebäudeautomation. Das Verfahren umfasst das Erstellen einer Vorlage, umfassend: Platzieren einer ersten Vielzahl von Geräten in einem ersten Gebäudeteil; Konfigurieren der ersten Vielzahl von Geräten; Auslesen von Zustandsinformationen der ersten Vielzahl von Geräten; und Erstellen eines Geräteprofils jedes Gerätes der ersten Vielzahl von Geräten auf Basis der Zustandsinformationen. Das Verfahren umfasst weiterhin das Konfigurieren der Geräte, umfassend: Platzieren einer zweiten Vielzahl von Geräten in einem zweiten Gebäudeteil; Auslesen von Zustandsinformationen der zweiten Vielzahl von Geräten; Erstellen eines Geräteprofils jedes Gerätes der zweiten Vielzahl von Geräten auf Basis der Zustandsinformationen; und das Konfigurieren der zweiten Vielzahl von Geräten anhand der Konfiguration der mit dem Geräteprofil der zweiten Vielzahl von Geräten übereinstimmenden ersten Vielzahl von Geräten. Die Zustandsinformationen enthalten Umgebungsinformationen.

## Beschreibung

Die vorliegende Erfindung betrifft die Konfiguration von Geräten zur Gebäudeautomation, insbesondere während der Kommissionierung der Geräte, beispielsweise in Neubauten. Die Erfindung betrifft insbesondere ein Verfahren zum Erstellen einer Vorlage, insbesondere einer Konfigurations-Vorlage, sowie das Konfigurieren von Geräten auf Basis der Vorlage.

### Stand der Technik

Zur Gebäudeautomation umfassen moderne Gebäude zahlreiche Überwachungs-, Steuer-, Regel- und Optimierungseinrichtungen. Solche Gebäudeautomations-Geräte ("Geräte") sind oft kommunikativ verbunden, beispielsweise um einen Sensor oder ein Bedienelement mit einem Aktor verbinden zu können. Zur kommunikativen Verbindung kommen oft ein oder mehrere Netzwerke in Betracht, insbesondere Drahtlosnetzwerke.

Insbesondere in komplexen Strukturen, beispielsweise Gebäuden mit einer Vielzahl von Geräten, kann die Kommissionierung der Geräte zeit- und arbeitsintensiv sein. Beispielsweise kann die Kommissionierung beinhalten, jedes der einzusetzenden Geräte nach dessen Platzierung zu konfigurieren, beispielsweise in ein bestehendes Netzwerk einzubinden und/oder mit weiteren Geräten zu verknüpfen.

Es besteht somit Bedarf an einer Lösung, um die Kommissionierung von Gebäudeautomations-Geräten zu erleichtern. Die hierin vorgeschlagene Erfindung löst das genannte Problem zumindest teilweise.

### Zusammenfassung

Die Erfindung ergibt sich aus den beiliegenden Ansprüchen.

Gemäß einem Aspekt ist ein Verfahren zur Konfigurierung von Geräten zur Gebäudeautomation beschrieben. Das Verfahren umfasst das Erstellen einer Vorlage, umfassend: Platzieren einer ersten Vielzahl von Geräten in einem ersten Gebäudeteil; Konfigurieren der ersten Vielzahl von Geräten; Auslesen von Zustandsinformationen der ersten Vielzahl von Geräten; und Erstellen eines Geräteprofils jedes Gerätes der ersten Vielzahl von Geräten auf Basis der Zustandsinformationen. Das Verfahren umfasst weiterhin das Konfigurieren der Geräte, umfassend: Platzieren einer zweiten Vielzahl von Geräten in einem zweiten Gebäudeteil; Auslesen von Zustandsinformationen der zweiten Vielzahl von Geräten; Erstellen eines Geräteprofils jedes Gerätes der zweiten Vielzahl von Geräten auf Basis der Zustandsinformationen; und das Konfigurieren der zweiten Vielzahl von Geräten anhand der Konfiguration der mit dem Geräteprofil der zweiten Vielzahl von Geräten übereinstimmenden ersten Vielzahl von Geräten. Die Zustandsinformationen enthalten Umgebungsinformationen.

Gemäß einem Aspekt ist ein Konfigurationsgerät zur Konfiguration von Geräten zur Gebäudeautomation beschrieben. Das Konfigurationsgerät beinhaltet einen Speicher, einen Controller, sowie eine oder mehrere Schnittstellen. Die Schnittstellen sind dazu eingerichtet, das Konfigurationsgerät mit einer Vielzahl von Gebäudeautomations-Geräten kommunikativ zu verbinden. Der Controller ist dazu eingerichtet, die Schnittstelle für eine kommunikative Verbindung zwischen der Schnittstelle und der Vielzahl von Geräten einzurichten und über die Schnittstelle mit der Vielzahl von Geräten zu kommunizieren, sowie Zustandsinformationen der Vielzahl von Geräten zu empfangen. Die Zustandsinformationen enthalten Umgebungsinformationen. Der Controller ist weiterhin dazu eingerichtet, ein Geräteprofil jedes Gerätes der Vielzahl von Geräten auf Basis der Zustandsinformationen zu erstellen und das Geräteprofil in dem Speicher zu speichern, sowie eine Konfiguration eines Geräts einer Vorlage in dem Speicher zu speichern und/oder auf eine Konfiguration eines Gerätes einer Vorlage zuzugreifen.

Gemäß einem Aspekt sind Geräte zur Gebäudeautomation ("Geräte") beschrieben. Unter dem Begriff Gebäudeautomation sind insbesondere Konzepte wie *Smart Living, Connected Home,* Hausautomation oder eHome-Lösungen zu verstehen. Als Gebäude kann insbesondere Wohnraum, beispielsweise ein oder mehrere Zimmer in einem Wohngebäude, wie etwa einer Wohnung oder einem Haus, jedoch auch vergleichbare Flächen und/oder Räumlichkeiten, wie beispielsweise Büroräume, Läden und dergleichen verstanden werden. Insbesondere kann es sich bei den Gebäuden um Neubauten handeln, jedoch können die vorgeschlagenen Lösungen gleichermaßen z.B. während Renovierungen, Modernisierungen und/oder Umbauten eingesetzt werden.

Gemäß einem Aspekt handelt es sich bei einem Gebäudeautomations-Gerät beispielsweise um einen Relaisaktor, einen Dimmaktor, einen Jalousieaktor, einen E-Kontaktaktor, einen Heizungsaktor, einen Raumtemperaturregler, einen Heizungsstellantrieb, einen Tastsensor, einen Bewegungsmelder, einen Präsenzmelder, eine Multimediasteuerung, ein Unterputz-Radio, eine Wandpanel, insbesondere ein Displaygerät, einen Fensterkontakt, eine Wetterstation, eine Klimagerät, einen Luftqualitätssensor, einen Alarmsensor, einen Zwischenstecker, und/oder eine Steckdose mit Aktorik. In manchen Ausführungsformen kann zumindest ein Gebäudeautomations-Gerät für die Steuerung und/oder Vernetzung weiterer Geräte vorgesehen sein, wie beispielsweise Netzknoten, *Hubs, Gateways* oder Edge-Knoten. Die Vielzahl von Geräten kann eine beliebige Kombination der genannten Geräte, sowie weiterer Geräte umfassen.

Gemäß einem Aspekt wird eine Vorlage erstellt. Das Erstellen einer Vorlage setzt üblicherweise voraus, dass ein Gebäudeteil oder ein Gebäude vorhanden ist, das als Vorlage für weitere Gebäude oder Gebäudeteile dienen kann. Beispielsweise kann es sich um gleiche oder weitestgehend ähnliche Räume handeln, wie etwa ein oder mehrere Zimmer in einem Apartment, einem Reihenhaus, und/oder einer sonstigen Wohneinheit, die denen einer weiteren Wohneinheit beziehungsweise dem entsprechenden Gebäudeteil weitestgehend gleichen oder zumindest ähneln. Beispielsweise kann es sich um einen Raum, einen Standard-Raum, oder eine Vielzahl von (Standard-)Räumen in einem (Standard-)Gebäude handeln. Bei dem zur Erstellung der Vorlage verwendeten ersten Gebäudeteil kann es sich um einen Teil desselben Gebäudes handeln wie dem zweiten Gebäudeteil, in dem die Geräte auf Basis der Vorlage konfiguriert werden. Der erste Gebäudeteil kann jedoch auch in einem anderen Gebäude als der zweite Gebäudeteil liegen. Gebäudeautomations-Geräte können im ersten Gebäudeteil und im zweiten Gebäudeteil an vergleichbaren Positionen und mit vergleichbarer Funktion vorgesehen sein. Die vorgeschlagenen Lösungen sind zum Beispiel gleichermaßen für Büros, beispielsweise einzelne Büroräume in einem Bürogebäude, geeignet.

Gemäß einem Aspekt können die Geräte in einem Netzwerk, insbesondere einem Gebäudeautomations-Netzwerk verbunden sein. Beispielsweise kann ein erster Teil einer Vielzahl von Geräten in einem Drahtlosnetzwerk, insbesondere einem Mesh-Drahtlosnetzwerk verbunden sein. Das Drahtlosnetzwerk kann in dem Gebäudeautomations-Netzwerk enthalten sein, beziehungsweise zumindest einen Teil des Gebäudeautomation-Netzwerks ausbilden. Beispielsweise kann ein zweiter Teil der Vielzahl von Geräten kabelgebunden mit dem Gebäudeautomations-Netzwerk verbunden sein. In manchen Ausführungsformen können alle Geräte in einem oder mehreren Mesh-Drahtlosnetzwerken verbunden sein. In manchen Ausführungsformen können Subnetzwerke, wie beispielsweise ein erstes *Mesh-*Drahtlosnetzwerk in einem ersten Raum, über Knoten mit anderen Subnetzwerken, beispielsweise einem zweiten Mesh-Drahtlosnetzwerk in einem zweiten Raum, oder einer Gruppe von kabelgebundenen und mit dem Knoten verbundenen Geräten, verbunden sein. Bei den Knoten kann es sich um *Hubs, Gateways* oder Edge-Knoten handeln.

Gemäß einem Aspekt ist ein Drahtlosnetzwerk beschrieben. Bei dem Drahtlosnetzwerk kann es sich um ein beliebiges bekanntes Drahtlosnetzwerk und/oder beliebige Funkbusse handeln, welche zum Anmeldetag bekannt und für die (lokale) Vernetzung von Gebäudeautomations-Geräten und/oder *Internet-of Things* (loT) Geräten geeignet sind. Insbesondere kann es sich bei dem Drahtlosnetzwerk um eines oder mehrere der folgenden handeln: KNX-RF, ZigBee, Enocean, IP500, Z-Wave, Thread, HOMEeasy (ELRO), Loxone Air, Bluetooth, insbesondere Bluetooth Low Energy, insbesondere Bluetooth Mesh, DECT ULE, Wi-Fi, und/oder 6LoWPAN.

Gemäß einem Aspekt kann es sich bei dem Drahtlosnetzwerk um ein Mesh-Drahtlosnetzwerk handeln. Insbesondere können einzelne Geräte direkt mit benachbarten und/oder sich in Funkreichweite befindenden Geräten kommunizieren, und/oder über benachbarte und/oder sich in Funkreichweite befindende Geräte mit weiteren sich nicht in Funkreichweite befindenden Geräten kommunizieren, insbesondere ohne über einen zentralen Knoten wie etwa einen *Access-Point* zu kommunizieren. Insbesondere können einzelne in einem *Mesh-*Drahtlosnetzwerk verknüpfte Geräte dazu eingerichtet sein, eine Nachbarschaftstabelle zu generieren. Die Nachbarschaftstabelle kann insbesondere Daten über die sich in Funkreichweite befindenden, benachbarten Geräte beinhalten, wie etwa eine Gerätekennung und Daten zur Signalstärke und/oder -qualität des benachbarten Geräts.

Ein Vorteil der vorgeschlagenen Methode, sowie den hierin beschriebenen Geräten, kann in der Vereinfachung der Kommissionierung von Gebäudeautomations-Geräten liegen. Anstelle für jeden Gebäudeteil, beispielsweise jede Wohnung, dieselben Konfigurationsschritte an jedem Gerät auszuführen, wird die Konfiguration nur einmal händisch oder weitestgehend händisch für die Vorlage durchgeführt und kann danach unter Verwendung der Vorlage erfolgen. Dadurch kann die Kommissionierung, insbesondere die Konfiguration der Geräte in weiteren Gebäudeteilen vorteilhafterweise weitestgehend automatisch erfolgen.

Vorteilhafterweise wird jedem Gerät ein Geräteprofil auf Basis von Zustandsinformationen zugeordnet. Dadurch ist die vorgeschlagene Lösung weitestgehend unabhängig von weiteren Informationen, wie etwa händischen Eingaben eines Installateurs während der Kommissionierung, oder einem Abgleich von Kennungen mit zuvor zu erstellenden Datenbanken.

Weitere Vorteile, Merkmale, Aspekte und Details, die sich mit den hierin beschriebenen Ausführungsformen kombinieren lassen, ergeben sich aus den abhängigen Ansprüchen, der Beschreibung und den Figuren.

### Kurzbeschreibung der Zeichnungen

Im Folgenden wird die Erfindung anhand von Ausführungsformen beschrieben, wobei auf die beiliegenden Figuren verwiesen wird. Es zeigen:
- Fig. 1: ein Gebäude mit mehreren Gebäudeteilen und darin vorhandenen Gebäudeautomations-Geräten;
- Fig. 2: ein Verfahren zur Konfiguration von Gebäudeautomations-Geräten gemäß einer Ausführungsform; und
- Fig. 3: ein Konfigurationsgerät gemäß einer Ausführungsform.

### Offenbarung der Erfindung

Im Folgenden wird im Detail auf die verschiedenen Ausführungsformen Bezug genommen, von denen ein oder mehrere Beispiele in den Figuren dargestellt sind. Jedes Beispiel dient der Erläuterung und ist nicht als Einschränkung zu verstehen. So können beispielsweise Merkmale, die als Teil einer Ausführungsform dargestellt oder beschrieben sind, an oder in Verbindung mit einer anderen Ausführungsform verwendet werden, um eine weitere Ausführungsform zu erhalten. Es ist beabsichtigt, dass die vorliegende Offenbarung solche Modifikationen und Variationen umfasst.

In der folgenden Beschreibung der Zeichnungen beziehen sich die gleichen Bezugsnummern auf gleiche oder ähnliche Bauteile. Im Allgemeinen werden nur die Unterschiede zu den einzelnen Ausführungsformen beschrieben. Sofern nicht anders angegeben, gilt die Beschreibung eines Teils oder Aspekts in einer Ausführungsform auch für ein entsprechendes Teil oder einen Aspekt in einer anderen Ausführungsform.

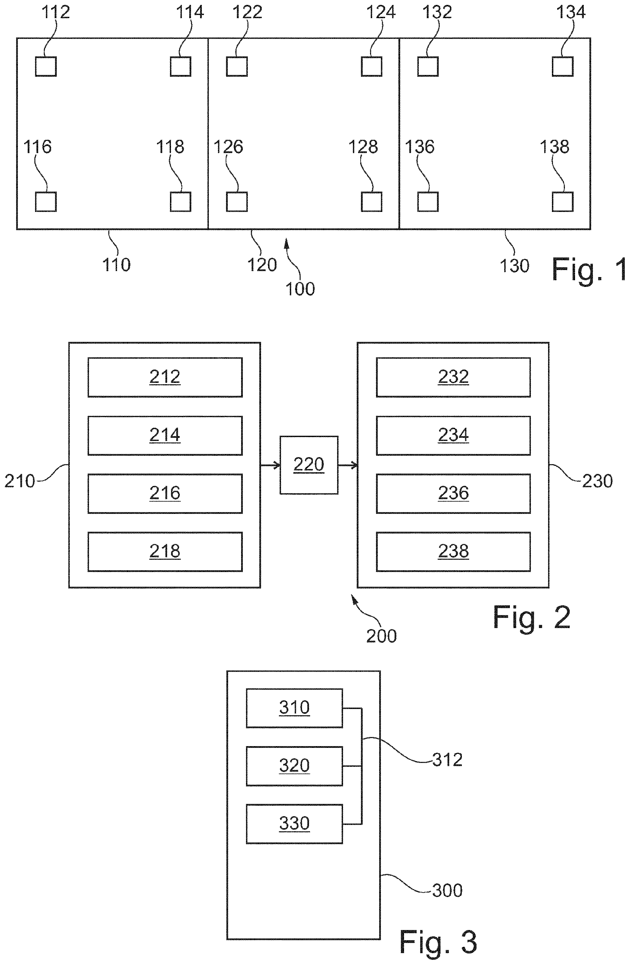

Fig. 1 zeigt ein Gebäude 100 mit mehreren Gebäudeteilen 110 ,120, 130. Die Gebäudeteile 110, 120, 130 gleichen sich weitestgehend in ihrer architektonischen Gestaltung. In Fig. 1 beinhalten die Gebäudeteile 110, 120, 130 jeweils einen Raum, jedoch kann der Gebäudeteil beliebig komplex sein und beispielsweise mehrere Räume, oder sogar mehrere Stockwerke umfassen. In manchen Ausführungsformen, beispielsweise in sich weitestgehend gleichenden Einzel- oder Mehrfamilienhäusern können sich die Gebäudeteile 110, 120, 130 in unterschiedlichen Gebäuden befinden.

In den Gebäudeteilen 110, 120, 130 sind jeweils vier Gebäudeautomations-Geräte 112-118, 122-128, 132-138 vorgesehen. Die jeweilige Vielzahl von Geräten in dem jeweiligen Gebäudeteil ist an der jeweils selben Position vorgesehen. Die jeweilige Vielzahl von Geräten kann einem Plan entsprechend für die Erfüllung desselben Zwecks vorgesehen sein, jeweils dieselbe oder ähnlichen Bauart und/oder denselben Typ an Geräten umfassen, und/oder in einem jeweiligen Gebäudeautomation-Netzwerk in weitestgehend identischer Art und Weise verknüpft sein. Insbesondere kann eine jeweilige Konfiguration der Vielzahl von Geräten in z.B. dem Gebäudeteil 110 der Konfiguration in dem Gebäudeteil 120 weitestgehend gleichen oder zumindest entsprechen.

In Fig. 2 ist ein Verfahren 200 zur Konfiguration von Gebäudeautomations-Geräten gezeigt. Das Verfahren wird der besseren Verständnis halber auch mit Bezug auf Fig. 1 erklärt, dies soll jedoch nicht als Einschränkung verstanden werden.

Das Verfahren 200 umfasst das Erstellen einer Vorlage 210. In Operation 212 wird eine erste Vielzahl von Geräten, beispielsweise die Vielzahl von Geräten 112, 114, 116, 118, in einem ersten Gebäudeteil 110 platziert. Das Platzieren kann beispielsweise den Einbau der Geräte, sowie, sofern erforderlich, eine Verkabelung der Geräte, wie beispielsweise den (physikalischen) Anschluss an eine Strom- und/oder Datenleitung umfassen.

In Operation 214 wird die erste Vielzahl von Geräten 112, 114, 116, 118 konfiguriert. Das Konfigurieren kann beispielsweise die Verwendung eines Konfigurationsgerätes, wie beispielsweise das hierin beschriebene Konfigurationsgerät 300, umfassen. Beispielsweise können die Geräte in ein Netzwerk, wie etwa ein Drahtlos-Netzwerk oder auch ein drahtgebundenes Netzwerk eingebunden werden. Beispielsweise können Programmierungen vorgenommen werden und/oder Betriebs- und/oder Steuerungsparameter der Geräte eingestellt werden. Beispielsweise können sicherheitsrelevante Daten geschrieben werden, wie beispielsweise ein Passwort oder Schlüssel für das Einbinden in einem gesicherten Netzwerk. Die Geräte werden üblicherweise gemäß ihrer Soll-Funktion im Gebäude konfiguriert. Beispielsweise kann ein Jalousie-Aktor mit einem ersten Tastsensor verknüpft werden. Beispielsweise kann ein zur Steuerung einer Lichtquelle vorgesehener Dimm-Aktor mit einem zweiten Tastsensor verknüpft werden. Das Konfigurieren der ersten Vielzahl von Geräten 112, 114, 116, 118 kann beispielsweise aufgrund von Planungsvorgaben, beispielsweise Bauplänen, erfolgen. Operation 214 kann bekannte Schritte zur Konfigurierung von Gebäudeautomations-Geräten umfassen. In Folge der in Operation 214 durchgeführten Schritte kann die erste Vielzahl von Geräten 112, 114, 116, 118 im ersten Gebäudeteil 110 ihrer Soll-Funktion entsprechend vollständig konfiguriert und/oder eingerichtet sein.

In Operation 216 werden Zustandsinformation der ersten Vielzahl von Geräten 112, 114, 116, 118 ausgelesen. Die Zustandsinformationen können vor, während, oder nach dem Konfigurieren der Geräte in Operation 214 ausgelesen werden. Das Auslesen kann das kommunikative Verbinden eines Konfigurationsgeräts 300 mit dem Gerät beinhalten. Vorzugsweise werden die Zustandsinformationen ausgelesen, nachdem sich Geräte, die zur Vernetzung in einem Drahtlos-Netzwerk eingerichtet sind, mit dem Drahtlos-Netzwerk verbunden haben, dies ist jedoch nicht essentiell. Vorzugsweise werden die Zustandsinformationen ausgelesen, nachdem die Geräte konfiguriert sind, dies ist jedoch nicht essentiell.

Die Zustandsinformationen umfassen Umgebungsinformationen. Insbesondere können die Zustandsinformationen Informationen über Signale, Werte, Daten oder sonstige messbare Größen umfassen, die von dem an der entsprechenden Soll-Position platzierten Gerät empfangbar bzw. messbar sind. Beispielsweise kann es sich bei den Umgebungsinformationen um Sensordaten eines Sensors handeln.

Beispielsweise kann ein zur Steuerung der Umgebungshelligkeit einzusetzendes Gerät, beispielsweise ein Jalousie- oder Dimmaktor, oder ein zur Steuerung des Aktors eingerichtetes Gerät, einen Helligkeits-Sensor umfassen. Die von dem Helligkeits-Sensor bereitgestellten Daten oder Helligkeitswerte können Zustandsinformationen und/oder Umgebungsdaten sein.

Beispielsweise kann ein kabelgebundenes Gerät, wie etwa ein Alarm- oder ein BewegungsSensor, über die kabelgebundene Verbindung eine Betriebsspannung erhalten und die Betriebsspannung mit einem Spannungs-Sensor messen. Die gemessene Spannung, wie etwa ein Widerstand oder ein Spannungsabfall aufgrund der Länge der kabelgebundenen Verbindung, kann beispielsweise Rückschlüsse über die (ungefähre) Entfernung des Geräts von der Spannungsquelle erlauben. Die von dem Spannungs-Sensor bereitgestellten Daten können Zustandsinformationen und/oder Umgebungsdaten sein.

Beispielsweise können insbesondere Geräte, die zur kabellosen Kommunikation, beispielsweise in einem Gebäudeautomations-Netzwerk, eingerichtet sind, Funksignale von anderen Geräten empfangen und/oder mit den anderen Geräten drahtlos und/oder per Funk kommunizieren. Signalstärken der empfangbaren Funksignale können Zustandsinformationen und/oder Umgebungsdaten sein. Kennungen der Geräte, die das empfangbare Funksignal senden, können Zustandsinformationen und/oder Umgebungsdaten sein. Weitere Informationen der Geräte, die das empfangbare Funksignal senden, wie beispielsweise Daten über Typ, Funktion, Herstellernummer oder dergleichen können Zustandsinformationen und/oder Umgebungsdaten sein. Das Funksignal kann ein zur Kommunikation in einem Drahtlosnetzwerk geeignetes Signal sein.

Insbesondere in Ausführungsformen, in denen mehrere der ersten Vielzahl von Geräten 112, 114, 116, 118 in einem Mesh-Drahtlosnetzwerk verbunden sind, können die Geräte Nachbarschaftstabellen generieren. Die Generierung einer Nachbarschaftstabelle erfolgt üblicherweise im Zuge des *Routings* von Signalen durch das Mesh-Drahtlosnetzwerk und kann durch das jeweils verwendete Netzwerkprotokoll definiert sein. Üblicherweise umfasst eine Nachbarschaftstabelle zumindest Daten über eine oder mehrere Kennungen eines Gerätes und die zugeordneten Signalstärken der durch das Gerät empfangbaren Funksignale. Die empfangbaren Funksignale könne vollständig oder zumindest teilweise von weiteren Geräten der ersten Vielzahl von Geräten 112, 114, 116, 118 stammen. Die Nachbarschaftstabelle und/oder in der Nachbarschaftstabelle enthaltene Daten können Zustandsinformationen und/oder Umgebungsdaten sein. In einem der Veranschaulichung dienenden Beispiel kann die Nachbarschaftstabelle des Geräts 112 Daten enthalten, die beispielsweise Rückschlüsse darüber erlauben, dass die Geräte 114 und 116 näher an dem Gerät 112 platziert sind als das Gerät 118.

In Operation 218 wird für die Vielzahl von ersten Geräten ein Geräteprofil erstellt. Das Geräteprofil wird auf Basis der Zustandsinformationen erstellt. Beispielsweise können in dem Geräteprofil eine Vielzahl von Daten enthalten sein, die eine oder mehrere der verfügbaren Zustandsinformationen enthalten. Beispielsweise kann das Geräteprofil eine Kennung, einen Typ, eine Seriennummer, eine Funktionsbeschreibung oder dergleichen enthalten. Beispielsweise kann das Geräteprofil Zustandsinformationen, insbesondere Umgebungsinformationen des Geräts enthalten. Auf Basis des Geräteprofils kann es möglich sein, das Gerät aus der Vielzahl von Geräten eindeutig zu identifizieren. Insbesondere kann es möglich sein, das Gerät auf Basis des Geräteprofils ohne weiter Informationen über das Gerät innerhalb der Vielzahl von Geräten im ersten Gebäudeteil zu lokalisieren, beispielsweise auf Basis einer im Geräteprofil enthaltenen Nachbarschaftstabelle, und/oder einem oder mehreren im Geräteprofil enthaltenen Sensordaten.

In manchen Ausführungsformen, insbesondere sofern die Erstellung des Geräteprofils nach dem Konfigurieren der Geräte erfolgt ist, kann das Verfahren 200, insbesondere das Erstellen der Vorlage 210, die Speicherung der Konfigurationsdaten der konfigurierten ersten Vielzahl von Geräten umfassen. Beispielsweise können die während der Konfiguration vorgenommenen Einstellungen als eine Soll-Konfiguration des jeweiligen Gerätes verstanden werden. Die Konfigurationsdaten können dazu geeignet sein, eine zweite Vielzahl von Geräten so zu konfigurieren, dass die zweite Vielzahl von Geräten der ersten Vielzahl von Geräten entsprechend konfiguriert ist. Die Konfigurationsdaten können mit den jeweiligen Geräteprofilen der ersten Vielzahl von Geräten verknüpft sein. Die Konfigurationsdaten können aus den jeweiligen Geräten nach deren Konfiguration ausgelesen werden. Die Konfigurationsdaten können, alternativ oder zusätzlich, während der Konfiguration der ersten Vielzahl von Geräten als eine Soll-Konfiguration, beispielsweise in dem Konfigurationsgerät 300, gespeichert werden, sodass die Soll-Konfiguration sowohl auf das Gerät der ersten Vielzahl von Geräte, also auch auf ein weiteres Gerät, beispielsweise ein Gerät einer zweiten Vielzahl von Geräten, übertragbar ist.

Nach dem Erstellen der Vorlage 210 kann die Vorlage 220 erstellt sein. Bei der Vorlage 220 kann es sich um ein Datenkonstrukt handeln, das beispielsweise in Form von einer oder mehreren Dateien in einem Konfigurationsgerät 300 oder einem sonstigen Datenträger speicherbar ist. Die Vorlage 220 kann das in Operation 218 erstellte Geräteprofil jedes Gerätes der ersten Vielzahl von Geräten umfassen. Die Vorlage kann zudem Konfigurationsdaten der konfigurierten ersten Vielzahl von Geräten umfassen. In Ausführungsform können die Konfigurationsdaten und/oder die Geräteprofile verknüpft sein und beispielsweise in einem Konfigurationspaket enthalten sein. Die Vorlage kann weitere Daten umfassen, wie beispielsweise eine dem ersten Gebäudeteil zuordenbare Kennung. Die Vorlage kann übermittelbar sein, beispielsweise an eine zentrale Serverstruktur, und/oder an weitere Konfigurationsgeräte 300.

Das Verfahren 200 umfasst weiterhin das Konfigurieren von Geräten 230, insbesondere das Konfigurieren einer zweiten Vielzahl von Geräten in einem zweiten Gebäudeteil. Wie in Fig. 1 gezeigt, kann es sich bei der zweiten Vielzahl von Geräten beispielsweise um die Geräte 122,124, 126, 128, oder um die Geräte 132, 134, 136, 138 handeln.

In Operation 232 wird die zweite Vielzahl von Geräten in dem zweiten Gebäudeteil 120 und/oder 130 platziert. Das Platzieren kann beispielsweise den Einbau der Geräte, sowie, sofern erforderlich, eine Verkabelung der Geräte, wie beispielsweise den (physikalischen) Anschluss an eine Strom- oder Datenleitung umfassen. Insbesondere können die Geräte der zweiten Vielzahl von Geräten weitestgehend identisch zur ersten Vielzahl von Geräten platziert werden, sodass sich der erste Gebäudeteil 110 und der zweite Gebäudeteil 120, 130 zumindest weitestgehend entsprechen.

In Operation 234 werden Zustandsinformationen der zweiten Vielzahl von Geräten ausgelesen. Das Auslesen der Zustandsinformationen kann weitestgehend dem Auslesen von Zustandsinformationen in Operation 216 entsprechen, jedoch können mehrere oder alle der zweiten Vielzahl von Geräten nicht-konfiguriert sein, beispielsweise in einem Zustand nach erster Inbetriebnahme oder bei Auslieferung des Gerätes sein.

In Operation 236 wird für jedes Gerät der zweiten Vielzahl von Geräten auf Basis der Zustandsinformationen ein Geräteprofil erstellt. Operation 236 kann weitestgehend der Operation 214 entsprechen.

In Operation 238 wird die zweite Vielzahl von Geräten anhand der Konfiguration der mit dem Geräteprofil der zweiten Vielzahl von Geräten übereinstimmenden ersten Vielzahl von Geräten konfiguriert. Insbesondere kann die Konfiguration der zweiten Vielzahl von Geräten umfassen, ein, mehrere oder alle der zweiten Vielzahl von Geräten anhand der Geräteprofile dem jeweiligen Gerät der ersten Vielzahl von Geräten zuzuordnen und nach der Zuordnung die dem jeweiligen Gerät der ersten Vielzahl von Geräten entsprechende Konfiguration auf das Gerät der zweiten Vielzahl von Geräten zu übertragen.

Vorteilhafterweise kann durch die Zuordnung auf Basis der Geräteprofile darauf verzichtet werden, die Geräte der zweiten Vielzahl von Geräten anhand weiterer, möglicherweise nur durch manuelle Interaktion zu erhaltende Daten zu identifizieren. Dadurch kann es möglich sein, sowohl die Zuordnung, als auch die Konfiguration der zweiten Vielzahl von Geräten zumindest teilweise, oder sogar vollständig zu automatisieren.

In manchen Ausführungsformen können eine oder mehrere der Operationen 214, 216, 218 sowie 234, 236, 238 von einem Konfigurationsgerät, beispielsweise dem hierin beschriebenen Konfigurationsgerät 300 ausgeführt werden. Das Ausführen der Operationen kann das kommunikative Verbinden des Kommunikationsgerätes mit einem oder mehreren der Vielzahl von Geräten umfassen. Die Konfiguration kann manuell, teil-automatisch oder sogar vollautomatisch erfolgen, insbesondere wenn bereits Konfigurationsdaten für das jeweilige Gerät vorhanden bzw. durch das Konfigurationsgerät abrufbar sind.

In manchen Ausführungsformen kann das Konfigurieren der Geräte 230 einen Vergleich der Geräteprofile der zweiten Vielzahl von Geräten mit den Geräteprofilen der zweiten Vielzahl von Geräten, und/oder eine Zuordnung zumindest eines Teils der zweiten Vielzahl von Geräten zu den jeweiligen Geräten der ersten Vielzahl von Geräten auf Basis des Geräteprofils umfassen.

Der Vergleich kann beispielsweise die Zuordnung von Geräten anhand von einzigartigen Werten- oder Daten in den Geräteprofilen der ersten und/oder zweiten Vielzahl von Geräten umfassen. Beispielsweise kann ein bestimmter Gerätetyp Zustandsinformationen und/oder Umgebungsinformationen enthalten, die in der jeweiligen Vielzahl von Geräten einzigartig sind. Beispielsweise kann für einen einzelnen Raum nur ein einzelner Temperatursensor vorgesehen sein, sodass nur ein einzelnes Geräteprofil der ersten Vielzahl von Geräten einen Temperatursensor-Wert enthält. Somit lässt sich der entsprechende Temperatursensor eindeutig innerhalb der zweiten Vielzahl von Geräten auf Basis des Vorhandenseins eines Temperatursensor-Werts in dem Geräteprofil identifizieren. Beispielsweise kann die Zuordnung auf Basis von logischem Schließen, z.B. *constraint programming,* zur Zuordnung von Geräteprofilen verwendet werden. Beispielsweise können für manche Geräte harte Bedingungen aufgestellt werden und/oder sein, die in einem zuordenbaren Geräteprofil ebenfalls erfüllt oder nicht erfüllt sein muss. Zum Beispiel kann ein Gerät durch den Anschluss einer Nebenstelle und/oder den Anschluss an eine Nebenstelle eindeutig identifizierbar sein.

In manchen Ausführungsformen kann die Zuordnung von Geräten anhand von weiteren Zustandsinformationen, insbesondere von Umgebungsinformationen erfolgen. Insbesondere kann eine in dem Geräteprofil vorhandene Nachbarschaftstabelle für jedes Gerät der jeweiligen Vielzahl von Geräten einzigartig, und für ein Gerät der ersten Vielzahl von Geräten und einem Gerät der zweiten Vielzahl von Geräten vergleichbar sein. Ein Vergleich der Geräteinformationen kann beispielsweise umfassen, eine Ähnlichkeit zwischen den Nachbarschaftstabellen der Geräte der zweiten Vielzahl von Geräten mit einem oder mehreren Geräten der ersten Vielzahl von Geräten festzustellen und/oder zu bewerten.

Als geeignete Möglichkeiten zum Feststellen von Ähnlichkeiten können Datenanalysealgorithmen und/oder Algorithmen zur Ähnlichkeitserkennung verwendet werden. Beispielsweise kann eine Ähnlichkeit durch die Verwendung von entsprechenden Maschinelles-Lernen-Algorithmen, beispielsweise trainierten Neuronalen Netzwerken festgestellt werden. Beispielsweise können Algorithmen zur Duplikaterkennung, wie beispielsweise Mustererkennungs-, Datenlinkage-, und/oder *Fuzzy Matching* Algorithmen verwendet werden.

Das Verfahren 200 kann eine manuelle Zuordnung von Geräten der ersten Vielzahl und der zweiten Vielzahl von Geräten umfassen, beispielsweise, um nicht eindeutig identifizierbare Geräte zuzuordnen.

In Ausführungsformen umfasst das Verfahren das Versetzen der zweiten Vielzahl von Geräten in einen Konfigurationsmodus, beispielsweise nach dem Platzieren der Geräte. Gleichermaßen kann auch die erste Vielzahl von Geräten während des Erstellens der Vorlage in einen Konfigurationsmodus versetzt werden. Ein Konfigurationsmodus kann es ermöglichen, ein Konfigurationsgerät 300 mit der jeweiligen Vielzahl von Geräten zu verbinden, beispielsweise um die Operationen 210 und/oder 230 auszuführen. Ein Konfigurationsmodus kann es ermöglichen, dass die Geräte zusätzliche Umgebungsinformationen generieren bzw. deren Generierung ermöglichen. Beispielsweise kann ein Gerät in einem Konfigurationsmodus zusätzliche Funksignale senden, die von weiteren Geräten empfangbar sind. Beispielsweise kann der Konfigurationsmodus ein Gerät dazu veranlassen, aktive Messungen durchzuführen, um weitere Zustandsinformationen und/oder Umgebungsinformationen zu erhalten, wie beispielsweise Signal-Laufzeiten zu einem mit dem Gerät kommunikativ verbundenen Gerät.

Das Versetzen der Vielzahl von Geräten in den Konfigurationsmodus kann beispielsweise das Stromlosschalten der Vielzahl von Geräten umfassen, beispielsweise durch eine kurze Unterbrechung der Stromversorgung in dem jeweiligen Gebäudeteil. Gleichermaßen kann auch für jedes Gerät beispielsweise eine entsprechende Taste betätigt werden. Gleichermaßen kann die Vielzahl von Geräten für den Empfang eines entsprechenden Signals eingerichtet sein, sodass das Verfahren das Senden eines Signals zum Versetzen der Geräte in den Konfigurationsmodus umfassen kann.

In Ausführungsformen kann das Verfahren 200 umfassen, ein an einer falschen Position positioniertes Gerät zu identifizieren. Insbesondere kann ein falsch positioniertes Gerät dadurch erkannt werden, dass das Gerät der zweiten Vielzahl von Geräten einem Gerät der ersten Vielzahl von Geräten entspricht, jedoch eine Diskrepanz zwischen dem Geräteprofil des Gerätes der ersten Vielzahl von Geräten und dem Geräteprofil des Geräts der zweiten Vielzahl von Geräten vorhanden ist.

In Fig. 3 ist ein Konfigurationsgerät 300 gezeigt. Das Konfigurationsgerät 300 umfasst einen Speicher 310, einen Controller 320 und eine Schnittstelle 330. Die Schnittstelle 330 ist dazu eingerichtet, das Konfigurationsgerät mit einer Vielzahl von Gebäudeautomations-Geräten ("Geräten"), beispielsweise einer ersten Vielzahl und/oder einer zweiten Vielzahl von Geräten kommunikativ zu verbinden. Wie in Fig. 3 gezeigt kann der Controller 320 dazu eingerichtet sein, auf die Schnittstelle 330 und den Speicher 310 zuzugreifen, beispielsweise um über die Schnittstelle mit den Geräten zu kommunizieren, und Daten und/oder Instruktionen vom Speicher 310 zu empfangen bzw. in dem Speicher zu speichern. Insbesondere kann in dem Konfigurationsgerät 312 eine kommunikative Verbindung 312 zwischen dem Speicher 310, dem Controller 320 und/oder der Schnittstelle 330 vorgesehen sein. Das Konfigurationsgerät 300 kann zudem dazu eingerichtet sein, um über die Schnittstelle 330, oder eine weitere Schnittstelle, mit einem weiteren Netzwerk, wie etwa dem Internet, zu kommunizieren.

Beispielsweise können Geräteprofile, Konfigurationsdaten, und/oder sonstige aus einer Vorlage generierten Daten aus dem Internet empfangbar sein und/oder über das Internet, beispielsweise auf einem dafür eingerichteten Server, speicherbar sein.

Der Controller 320 kann einen Prozessor umfassen, wie etwa eine CPU oder eine sonstige zur Datenverarbeitung eingerichtete Computereinheit. Der Prozessor kann dazu eingerichtet sein, eine Software auszuführen, die das Konfigurationsgerät 300 dazu veranlasst, ein Verfahren 200, insbesondere durch das Konfigurationsgerät ausführbare Operationen, gemäß einer hierin beschriebenen Ausführungsform auszuführen. Die Software kann beispielsweise in dem Speicher 310 gespeichert sein.

Der Controller 320 ist dazu eingerichtet, die Schnittstelle 330 für eine kommunikative Verbindung zwischen der Schnittstelle und der Vielzahl von Geräten einzurichten und über die Schnittstelle mit der Vielzahl von Geräten zu kommunizieren. Insbesondere kann der Controller 320 dazu eingerichtet sein, sowohl mit (konfigurierten) Geräten einer ersten Vielzahl von Geräten zu kommunizieren, als auch mit (nicht konfigurierten) Geräten einer zweiten Vielzahl von Geräten zu kommunizieren. Die Schnittstelle kann insbesondere eine Schnittstelle zur kabellosen Kommunikation sein, beispielsweise um das Konfigurationsgerät 300 in ein Drahtlosnetzwerk, beispielsweise ein Gebäudeautomations-Netzwerk einzubinden. Alternativ, oder zusätzlich, kann das Konfigurationsgerät eine oder mehrere Schnittstellen zur kabelgebundenen Kommunikation umfassen.

Der Controller 320 ist dazu eingerichtet, Zustandsinformationen der Vielzahl von Geräten zu empfangen. Die Zustandsinformationen enthalten Umgebungsinformationen, insbesondere Umgebungsinformationen des jeweiligen Gerätes. Das Empfangen der Zustandsinformationen kann insbesondere das Ausführen der Operationen 216 und/oder 234 des Verfahrens 200 umfassen.

Der Controller 320 ist dazu eingerichtet, ein Geräteprofil jedes Gerätes der Vielzahl von Geräten auf Basis der Zustandsinformationen zu erstellen. Das Erstellen des Geräteprofils kann insbesondere das Ausführen der Operationen 218 und/oder 236 des Verfahrens 200 umfassen. Der Controller 320 ist dazu eingerichtet, das Geräteprofil in dem Speicher 310 zu speichern. Das Speichern kann ein Zwischenspeichern umfassen. Das Speichern kann das Aggregieren und/oder Generieren einer Liste von Geräteprofilen der Vielzahl von Geräten umfassen. Beispielsweise können die Geräteprofile der Vielzahl von Geräten als die Geräteprofile einer Vorlage, oder die Geräte einer zu konfigurierenden zweiten Vielzahl von Geräten zusammengefasst werden. Die Geräteprofile können Teil einer Vorlage, und/oder Teil eines Konfigurationspakets sein.

Der Controller 320 ist dazu eingerichtet, eine Konfiguration eines Gerätes einer Vorlage in dem Speicher zu speichern, und/oder auf eine Konfiguration eines oder mehrerer Geräte einer Vorlage zuzugreifen. In einem ersten Ausführungsbeispiel kann die Konfiguration des Gerätes während der Konfiguration des Gerätes durch das Konfigurationsgerät 300 erhalten werden. Beispielsweise kann während der Konfiguration von Geräten einer Vorlage die Konfiguration beispielsweise in Form von Konfigurationsdaten in dem Speicher gespeichert werden. Beispielsweise kann die Konfiguration mit Geräteprofilen verknüpft sein. Beispielsweise kann die Konfiguration eines Gerätes in einem Konfigurationspaket gespeichert sein. In einem zweiten Ausführungsbeispiel kann die Konfiguration des Gerätes von dem Konfigurationsgerät 300 durch Zugriff auf eine gespeicherte Konfiguration erhalten werden. Beispielsweise kann das Konfigurationsgerät 300 die Konfiguration, beispielsweise als Konfigurationspaket, von einem weiteren Gerät, beispielsweise einem weiteren Konfigurationsgerät 300 oder einem Server, erhalten. Die Konfiguration kann in dem Speicher gespeichert oder zwischengespeichert werden. In Ausführungsformen kann das Konfigurationsgerät 300 dazu eingerichtet sein, zumindest ein Konfigurationspaket zu empfangen und/oder zu übermitteln.

Das vorgeschlagene Konfigurationsgerät 300 kann vorteilhafterweise dazu geeignet sein, sowohl für die Konfiguration von Geräten einer ersten Vielzahl von Geräten verwendet zu werden und dabei vorzugsweise eine Vorlage zu erstellen, also auch auf Basis der Vorlage die Konfiguration einer zweiten Vielzahl von Geräten vorzunehmen.

In Ausführungsformen kann der Controller 320 dazu eingerichtet sein, das Geräteprofil der Vielzahl von Geräten mit einem in dem Speicher gespeicherten Geräteprofil einer Vielzahl von Geräten einer Vorlage abzugleichen, sowie zumindest einen Teil der Geräte den jeweiligen Geräten der Vorlage auf Basis des Vergleichs zuzuordnen und die Geräte entsprechend der zugeordneten Geräte der Vorlage zu konfigurieren. Die hierfür ausgeführten Operationen können den Operationen 236 und/oder 238 der Methode 200 entsprechen. Das Konfigurieren der Geräte kann das Senden der Konfiguration an die mit dem Konfigurationsgerät 300 verbundenen Geräte, insbesondere über die Schnittstelle 330, umfassen.

In Ausführungsformen kann das Kommunikationsgerät 300 ein Netzknoten, beispielsweise ein *Hub, Gateway* oder Edge-Knoten eines Gebäudeautomations-Netzwerks sein. Der Netzknoten kann in gleicher Weise wie weitere Geräte platziert sein und beispielsweise dauerhaft als Teil des Gebäudeautomations-Netzwerks vorgesehen sein. Zur Konfigurierung der Geräte kann der Netzknoten eine Vorlage, beispielsweise ein Konfigurationspaket, empfangen, und/oder zum Empfangen der Vorlage eingerichtet sein. Insbesondere kann der Netzknoten dazu eingerichtet sein, sich während der Kommissionierung der Vielzahl von Geräten, beispielsweise über das Internet mit einem Server, oder lokal mit einem weiteren Konfigurationsgerät zu verbinden, um die Vorlage zur Speicherung in dem Speicher zu erhalten. Zur Konfigurierung kann der Netzknoten dazu eingerichtet sein, die Operationen 234, 236 und/oder 238 des Verfahrens 200 auszuführen.

In Ausführungsformen kann das Konfigurationsgerät 300 ein tragbares Gerät sein. Beispielsweise kann es sich um ein Smartphone, einen tragbaren Computer, ein Tablet, oder ein sonstiges Computergerät handeln. Das Konfigurationsgerät 300 kann transitiv mit der Vielzahl von Geräten verbindbar sein. Das Konfigurationsgerät 300 kann zur Konfigurierung gleich oder ähnlich wie ein Netzknoten verwendbar sein. Das Konfigurationsgerät 300 kann zudem zur Konfigurierung der Geräte einer Vorlage verwendbar sein, und während der Konfigurierung der Geräte der Vorlage die Vorlage erstellen. Beispielsweise kann ein Techniker die Geräte einer ersten Vielzahl von Gebäudeautomations-Geräten mit dem Konfigurationsgerät manuell konfigurieren. Während der Konfiguration der ersten Vielzahl von Geräten kann das Konfigurationsgerät 300 automatisch oder zumindest teilautomatisch eine Vorlage erstellen. Weitere Geräte, beispielsweise eine zweite Vielzahl von Geräten, können mithilfe des Konfigurationsgerätes 300 und der darin gespeicherten Vorlage und/oder dem darin gespeicherten Konfigurationspaket automatisch oder zumindest teilautomatisch konfiguriert werden.

In Ausführungsformen ist ein Gebäudeautomations-Netzwerk beschrieben. Das Gebäudeautomations-Netzwerk umfasst eine Vielzahl von Gebäudeautomations-Geräten, wie beispielsweise die Geräte 112, 114, 116, 118, sowie ein Konfigurationsgerät 300. Das Konfigurationsgerät 300 kann insbesondere ein Netzknoten des Gebäudeautomations-Netzwerks sein. Das Gebäudeautomations-Netzwerk kann ein Drahtlosnetzwerk umfassen, insbesondere ein Mesh-Drahtlosnetzwerk. Das Gebäudeautomations-Netzwerk kann, alternativ oder zusätzlich, ein kabelgebundenes Netzwerk umfassen.

In Ausführungsformen ist ein Computerprogrammprodukt beschrieben. Das Computerprogrammprodukt umfasst Befehle, die bei der Ausführung des Programms durch ein Konfigurationsgerät, beispielsweise das Konfigurationsgerät 300, dieses veranlasst, eine Methode gemäß der hierin beschriebenen Ausführungsformen auszuführen. Insbesondere kann das Programm das Konfigurationsgerät dazu veranlassen, auf Basis von platzierten Geräten eine Vorlage 220 zu erstellen oder platzierte Geräte auf Basis der Vorlage zu konfigurieren. Insbesondere kann das Programm das Konfigurationsgerät dazu veranlassen, Geräteprofile der Geräte zu erstellen. Insbesondere kann das Programm das Konfigurationsgerät dazu veranlassen, die Operationen 214, 216, 218, 234, 236 und/oder 238 des Verfahrens 200 auszuführen.

In Ausführungsformen ist ein computerlesbarer Datenträger beschrieben, der ein Computerprogrammprodukt gemäß der hierin beschriebenen Ausführungsformen beinhaltet.

In Ausführungsformen ist ein Datenträgersignal beschrieben, das das Computerprogrammprodukt gemäß der hierin beschriebenen Ausführungsformen beinhaltet.

## Patentansprüche

1. Verfahren zur Konfigurierung von Geräten zur Gebäudeautomation, umfassend
a.) Erstellen einer Vorlage, umfassend
aa.) Platzieren einer ersten Vielzahl von Geräten in einem ersten Gebäudeteil;
ab.) Konfigurieren der ersten Vielzahl von Geräten;
ac.) Auslesen von Zustandsinformationen der ersten Vielzahl von Geräten;
ad.) Erstellen eines Geräteprofils jedes Gerätes der ersten Vielzahl von Geräten auf Basis der Zustandsinformationen;
b.) Konfigurieren der Geräte, umfassend
ba.) Platzieren einer zweiten Vielzahl von Geräten in einem zweiten Gebäudeteil;
bb.) Auslesen von Zustandsinformationen der zweiten Vielzahl von Geräten;
bc.) Erstellen eines Geräteprofils jedes Gerätes der zweiten Vielzahl von Geräten auf Basis der Zustandsinformationen;
bd.) Konfigurieren der zweiten Vielzahl von Geräten anhand der Konfiguration der mit dem Geräteprofil der zweiten Vielzahl von Geräten übereinstimmenden ersten Vielzahl von Geräten; wobei
die Zustandsinformationen Umgebungsinformationen enthalten.

2. Das Verfahren nach Anspruch 1, wobei das Konfigurieren der Geräte umfasst:
be.) Vergleich der Geräteprofile der zweiten Vielzahl von Geräten mit den Geräteprofilen der ersten Vielzahl von Geräten; und
bf.) Zuordnung zumindest eines Teils der zweiten Vielzahl von Geräten zu den jeweiligen Geräten der ersten Vielzahl von Geräten auf Basis des Geräteprofils.

3. Das Verfahren nach Anspruch 1 oder 2, wobei das Erstellen der Vorlage die Speicherung von Konfigurationsdaten der konfigurierten ersten Vielzahl von Geräten umfasst, und wobei das Konfigurieren der zweiten Vielzahl von Geräten auf Basis der gespeicherten Konfigurationsdaten erfolgt.

4. Das Verfahren nach einem der vorhergehenden Ansprüche, wobei die Zustandsinformationen Signalstärken eines empfangbaren Funksignals umfassen.

5. Das Verfahren nach einem der vorhergehenden Ansprüche, wobei die Zustandsinformationen eine Kennung eines Gerätes, das ein empfangbares Funksignal sendet, umfassen.

6. Das Verfahren nach Anspruch 4 oder 5 wobei die Zustandsinformationen eine Nachbarschaftstabelle umfassen, wobei die Nachbarschaftstabelle eine oder mehrere Kennungen eines Gerätes und die zugeordneten Signalstärken der durch das Gerät empfangbaren Funksignale umfasst.

7. Das Verfahren nach einem der vorhergehenden Ansprüche, wobei das Verfahren das Versetzen der zweiten Vielzahl von Geräten in einen Konfigurationsmodus umfasst.

8. Konfigurationsgerät zur Konfiguration von Geräten zur Gebäudeautomation, umfassend:
einen Speicher,
einen Controller,
eine oder mehrere Schnittstellen, wobei die Schnittstellen dazu eingerichtet sind, das Konfigurationsgerät mit einer Vielzahl von Gebäudeautomations-Geräten kommunikativ zu verbinden; und wobei der Controller dazu eingerichtet ist:
a.) die Schnittstelle für eine kommunikative Verbindung zwischen der Schnittstelle und der Vielzahl von Geräten einzurichten und über die Schnittstelle mit der Vielzahl von Geräten zu kommunizieren;
b.) Zustandsinformationen der Vielzahl von Geräten zu empfangen, wobei die Zustandsinformationen Umgebungsinformationen enthalten;
c.) ein Geräteprofil jedes Gerätes der Vielzahl von Geräten auf Basis der Zustandsinformationen zu erstellen und das Geräteprofil in dem Speicher zu speichern; und
d.) eine Konfiguration eines Gerätes einer Vorlage in dem Speicher zu speichern und/oder auf eine Konfiguration eines Gerätes einer Vorlage zuzugreifen.

9. Das Konfigurationsgerät nach Anspruch 8, wobei der Controller zusätzlich dazu eingerichtet ist:
e.) das Geräteprofil der Vielzahl von Geräten mit einem in dem Speicher gespeicherten Geräteprofil einer Vielzahl von Geräten einer Vorlage abzugleichen, sowie zumindest einen Teil der Geräte den jeweiligen Geräten der Vorlage auf Basis des Vergleichs zuzuordnen; und
f.) die Geräte entsprechend der zugeordneten Geräte der Vorlage zu konfigurieren.

10. Das Konfigurationsgerät nach Anspruch 8 oder 9, wobei das Konfigurationsgerät dazu eingerichtet ist, zumindest ein Konfigurationspaket auf Basis des Geräteprofils und der Konfiguration einer Vielzahl von Geräten einer Vorlage in dem Speicher zu speichern.

11. Das Konfigurationsgerät nach einem der Ansprüche 8 bis 10, wobei das Konfigurationsgerät ein Netzknoten eines Gebäudeautomations-Netzwerks ist.

12. Das Konfigurationsgerät nach einem der Ansprüche 8 bis 11, wobei das Konfigurationsgerät ein tragbares Gerät ist, und wobei das Konfigurationsgerät transitiv mit der Vielzahl von Geräten verbindbar ist.

13. Ein Gebäudeautomations-Netzwerk umfassend die Vielzahl von Geräten und das Konfigurationsgerät nach einem der Ansprüche 7 bis 12.

14. Computerprogrammprodukt, umfassend Befehle, die bei der Ausführung des Programms durch ein Konfigurationsgerät dieses veranlasst, die Schritte ab.)-ad.) und/oder die Schritte bb.)-bd.) der Methode nach einem der Ansprüche 1 bis 7 auszuführen.

15. Computerlesbarer Datenträger oder Datenträgersignal, der/das das Computerprogrammprodukt nach Anspruch 14 beinhaltet.
